Europäisches Patentamt

European Patent Office

Office européen des brevets

(11) Publication number: **0 227 263 B1**

# EUROPEAN PATENT SPECIFICATION

(45) Date of publication of patent specification: **10.04.91**     (51) Int. Cl.⁵: **A23F 5/50**

(21) Application number: **86308391.1**

(22) Date of filing: **28.10.86**

(54) Process for the recovery of volatile coffee constituents.

(30) Priority: **13.11.85 GB 8528011**

(43) Date of publication of application:
**01.07.87 Bulletin 87/27**

(45) Publication of the grant of the patent:
**10.04.91 Bulletin 91/15**

(84) Designated Contracting States:
**AT BE CH DE ES FR GB GR IT LI LU NL SE**

(56) References cited:
**EP-A- 0 041 634          EP-A- 0 089 832**
**CA-A- 1 001 476          GB-A- 477 670**
**US-A- 3 164 474          US-A- 3 248 233**
**US-A- 4 107 339**

(73) Proprietor: **GENERAL FOODS LIMITED**

**Banbury Oxfordshire, OX16 7QU(GB)**

(72) Inventor: **Khatachourian, Eva Louise**
**10 Kingsway**
**Banbury Oxon(GB)**
Inventor: **Lascelles, Le Gay John**
**2 Old Vicarage Gardens**
**Cropredy Nr. Banbury Oxon(GB)**
Inventor: **Rowan, William c/o General Foods**
**Corp.**
**250 North Street**
**White Plains, N.Y., 10625(US)**

(74) Representative: **Allard, Susan Joyce et al**
**BOULT, WADE & TENNANT, 27 Furnival**
**Street**
**London EC4A 1PQ(GB)**

## Description

The present invention relates to a process for the recovery of volatile coffee consituents and, in particular to a process for the recovery of the light-medium volatile compounds which are generated during extraction. The recovered volatile coffee constituents are then added to the coffee extract, prior to drying, in order to enhance the flavour of the soluble coffee product so-obtained.

The problem of preparing soluble coffee products which resemble a home-brewed roast and ground coffee in flavour and aroma characteristics is well known. The preparation of commercial soluble coffee products comprising extracting soluble solids from coffee and then drying the resultant extract to a powder normally involves processing techniques which tend to degrade the flavourful coffee constituents which characterise freshly brewed roast and ground coffee. Processes such as dilute extraction, low temperature spray-drying and freeze-drying, which are designed to retain a large number of volatile constituents from the coffee, have met with varying degrees of success. Such processes, however, generally also involve increased costs.

EP-A-0041634 describes a coffee aromatisation process in which volatile aromatics entrained in the coffee extract are separated from the extract and passed through at least two condensers. At the temperatures at which these condensers are operated, the constituents which would be condensed from the gas stream are the heavy volatile aromatic constituents. The condensate is either mixed with a liquid edible oil to form an emulsion which may subsequently be plated onto the dried coffee product, or the emulsion may be encapsulated and the capsules combined with the dried coffee extract. There is no teaching in this document of the addition of the volatile constituents back to the coffee extract prior to drying.

We have now developed a process for producing a soluble coffee product in which the volatile coffee constituents which were previously lost on storing the coffee extract in hold tanks and in the gases vented from the coffee extraction columns are recovered and added to a coffee extract prior to drying.

Accordingly, the present invention provides a process for the production of a soluble coffee product which process comprises the steps of :-

i) subjecting roast and ground coffee to extraction with an extraction liquid in a series of extraction columns to extract soluble components therefrom and thereby produce a coffee extract;

ii) passing the coffee extract obtained from the final extraction column in step (i) to a flash stripping vessel whereby the light-medium volatile constituents are flashed therefrom;

iii) condensing the flashed vapours to produce a flavour and/or aroma enhancing constituent;

iv) passing at a temperature of about $25°C$ non-condensible constituents of the vapour stream to a scrubber, optionally together with grinder gases and/or vent gases, absorbing the said non-condensible constituents into water;

v) adding the condensate, or a part of the condensate, from step (iii) and the liquid offtake from the scrubber of step (iv) to the coffee extract from step (ii) prior to drying; and

vi) spray drying the enhanced coffee extract in order to produce a soluble coffee product.

As used herein the term "roast and ground coffee" is meant to include both a single variety and a blend of coffee varieties and both natural and decaffeinated coffees.

The terms "aroma" and "flavour" are used to describe the extracted volatile constituent, which, when added to a soluble coffee product, may contribute a flavour and/or an aroma to the product. In many cases the constituent will contribute both flavour and aroma to the product.

Typical extraction processes which may be used include semi-continuous counter-current multi-stage extraction, continuous counter-current extraction and single stage extraction. Commercial processes generally involve the semi-continuous, counter-current extraction of soluble coffee components from roast and ground coffee contained in a series of extraction columns. The extraction columns contain coffee of varying degrees of extraction, or depletion of soluble components. The extraction liquid is generally water which is fed first to the extraction column containing the most extracted coffee and the extraction liquid then flows through the columns containing coffee of a progressively lesser degree of extraction. The liquid is then drawn off as a coffee extract from the final extraction column in the set which generally contains the least extracted coffee, typically fresh unextracted roast and ground coffee. Extract concentrations are typically in the range of from 10 to 30% by weight solids.

The coffee extract is generally passed from the final extraction column to the flash stripping vessel through a back pressure valve which is preferably maintained at a pressure of about $138 \times 10^3$ Pa (20 psia). The coffee extract will normally be at the temperature at which the final extraction was carried out, for example at a temperature in the range of from 70 to $105°C$. The flash stripping vessel may be operated under a vacuum or at a pressure of up to $276 \times 10^3$ Pa (40 psia). The preferred operating pressure range is from (6.90 $\times 10^3$ Pa (1 to 10 psia).

The coffee extract flashes upon entry into the flash stripping vessel and the vapours are then condensed, for example in a vertical shell and tube condenser maintained at the pressure of the flash stripping vessel.

Vent gases from the extraction columns may also be passed through the flash stripping vessel where they combine with the flashed vapours before being passed to the condenser.

The coffee extract which has been subjected to flash stripping is generally passed to a plate cooler where it is cooled to a temperature of about 25°C prior to the next processing stage.

The condensed vapour stream may be further treated, if desired, in a fractional distillation column to separate the various components thereof. For example, volatile acids may be removed in the bottom fractions thereby leaving top fractions containing the preferred flavour and/or aroma enhancing compounds. This product may be added to the coffee extract before spray drying to produce a soluble coffee product.

The constituents of the vapour stream which do not condense are then generally passed to a gas scrubber where they are absorbed into water preferably at a temperature of less than 10°C, more preferably at a temperature in the range of from 0 to 5°C. The gas scrubber operates with recycling water, a portion of which is taken off and fresh make up water added in the same amount. For example a scrubber may operate with a recycled volume of 100 or 1000 l of water, the offtake from which would be about 3 l per hour. An alternative method of scrubbing the non-condensible volatile stream is to absorb the stream into fresh water and feed this stream into a distillation column together with the condensed volatile stream.

Gases which are produced during the grinding of roast coffee beans may also be passed to the gas scrubber. Preferably the grinder gases will be combined with the non-condensible portion of the vapour stream prior to being passed through the gas scrubber.

The offtake from the scrubber operating with recycled water is also preferably added to the coffee extract before drying, in order to enhance the flavour of the coffee product.

The addition of the condensate produced in step (iii) of the process of the invention to the coffee extract from step (ii) may be effected by conventional mixing techniques, whilst the drying of the enhanced coffee extract in step (v) is carried out by spray drying, which technique is well known in the art. If desired, the extract may be concentrated, for example by evaporation, before drying.

The process of the present invention will be further described with reference to the accompanying drawings, in which:-

Figure 1 is a schematic diagram of the process of the present invention; and

Figure 2 is a schematic diagram of an alternative type of scrubber.

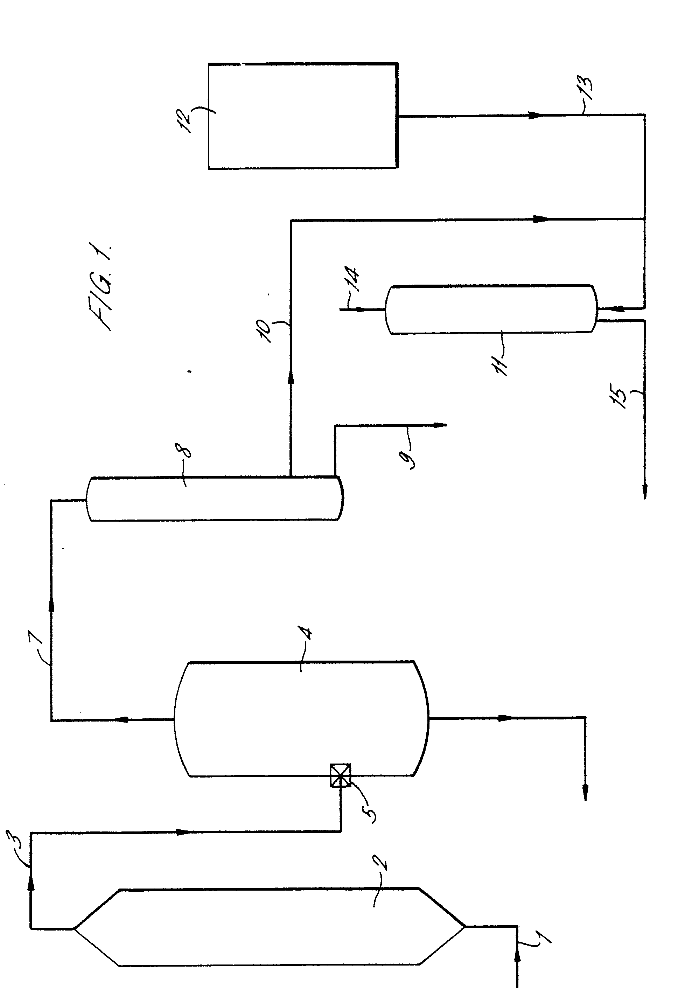

Referring to Figure 1, an extraction liquid at an elevated temperature from a set of extraction columns (not shown) is passed along line 1 to the final column 2 of the set which contains fresh roast and ground coffee and which is operated at atmospheric pressure. The extraction liquid passes into the bottom of the column and an enriched liquid containing soluble coffee compounds exits from the top of the column along line 3. Any extract or vent gases are also passed with the liquid along line 3. This enriched liquid is then passed to the flash stripper vessel 4 via back pressure valve 5. Upon entering the flash stripper 4, the volatile components are flashed from the liquid. The stripped coffee extract is then passed from the flash stripping vessel 4 via line 6 to a plate cooler (not shown) where it is cooled to a temperature of about 25°C. After cooling it is then passed to hold tanks (not shown) for storage prior to drying. The flashed vapours together with any non-condensible gases are passed along line 7 to a vertical tube and shell condenser. A condensate stream leaves the condenser along line 9, this condensate stream may optionally be subjected to fractional distillation to remove unwanted compounds therefrom. The non-condensible vapours from the tube and shell condenser 8 are passed along line 10 to the bottom of a scrubber 11. Gases from the grinding of roast coffee in grinder 12 are passed along line 13 to join the non-condensible vapours as they are passed to the scrubber 11. The scrubber is maintained at atmospheric pressure and the gases are scrubbed counter currently with water at a temperature of below 10°C which is passed to the top of the scrubber along line 14. The liquid offtake emerges from the bottom of the scrubber along line 15. The condensate stream 9, optionally after distillation, together with the offtake stream 15 are then added to a coffee extract and the enhanced coffee extract, optionally after concentration, is then dried by low-temperature spray drying in order to produce a soluble coffee product.

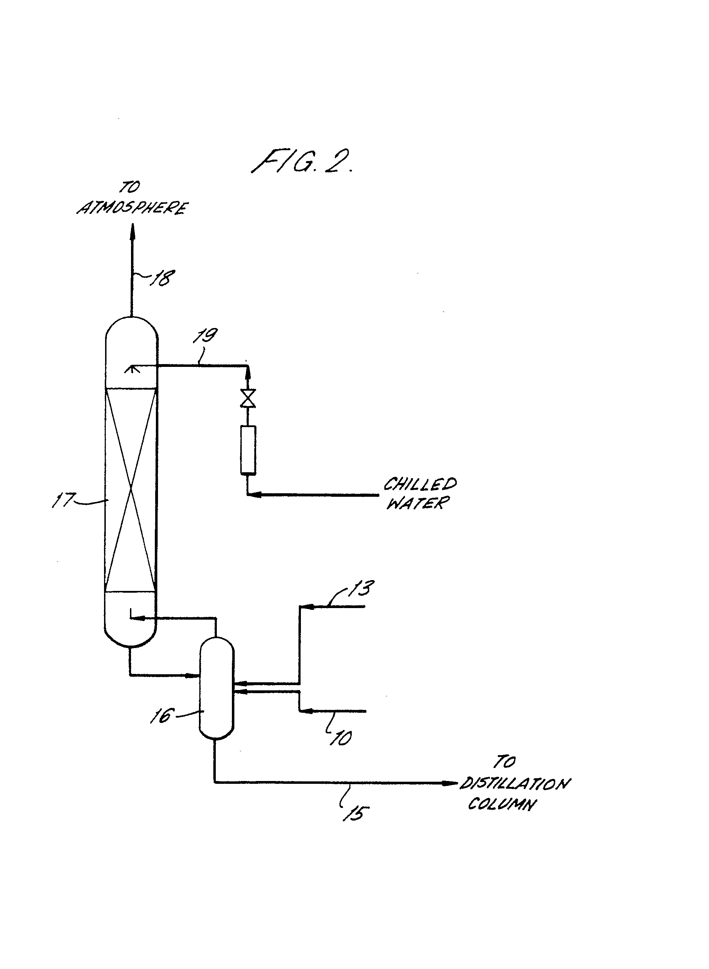

In an alternative arrangement as shown in Figure 2, gases from the grinding of roast coffee in a grinder are passed along line 13 to join the gases in the non-condensible stream 10 as they are passed to the receiver 16 of the absorber 17. The gases flow from the top of the receiver 16 into the bottom of the absorber 17. The absorber is a column packed with random packing. The gas streams flow up through the packing and the stripped non-condensible gas passes to the atmosphere from the top of the column as shown at 18. Water at 5°C is fed along line 19 to the top of the packing and flows counter-current to the non-condensible gases and is collected in the receiver 16. The absorber 17 is maintained at nominal atmospheric pressure. The extracted water is pumped from the receiver at a controlled rate and can be fed along line 15 directly into the subsequent processes together with the condensate stream as described with reference to Figure 1.

The present invention is further illustrated by the following Examples.

EXAMPLE 1

645 Kg/hr of a coffee extract obtained from the final extraction column of a set of extraction columns at a temperature in the range of from 82° to 91° C was passed from the final column through a back pressure valve into a flash stripping vessel having a diameter of 75 centimetres and a height of 100 centimetres. The flash vessel was maintained at a pressure of $11.73 \times 10^3$ Pa (1.7 psia). The extraction vent gases from the extraction column were also passed to the flash stripping vessel. The flashed vapour and any non-condensible gases were partially condensed in a vertical tube and shell condenser.

The stripped coffee extract was then pumped out of the vessel to a plate cooler where it was cooled to a temperature of 25° C.

The non-condensible vapours from the tube and shell condenser, together with 60 l/hour of grinder gases, were passed through an absorption column which was maintained at atmospheric pressure. The gases were scrubbed counter-currently with water at a temperature of below 10° C.

30 l/hour of volatile constituents were condensed in the condenser. The condensed vapour stream was fed to a distillation column with a feed to distillate concentration ratio of 20:1. The distillate, together with the liquid offtake from the scrubber, was added to the coffee extract before it was spray dried to produce a soluble coffee product.

Consumer tests have shown a requirement for a high impact but smooth and rounded instant coffee flavour in a soluble coffee product. It has been found that the process of the present invention, by allowing the recovery of more light/medium volatile constituents, provides a product having a much improved balance between high impact and harshness.

EXAMPLE 2

583 Kg/hr of coffee extract obtained from the final extraction column of a set of extraction columns at a temperature of about 85° C, together with extraction vent gases, was passed from the final column, through a back pressure valve into a flash stripping vessel having a diameter of 75 centimetres and a height of 6 metres. The flash stripping vessel was maintained at a pressure of 15.18 $\times 10^3$ Pa (2.2 psia). The flashed vapour and any non-condensible gases were partially condensed in a vertical tube and shell condenser.

The stripped coffee extract was then pumped out of the vessel to a plate cooler where it was cooled to a temperature of 25° C before the next processing stage.

The non-condensible vapours from the tube and shell condenser were passed through an absorption column which was maintained at atmospheric pressure. The gases were scrubbed counter-currently with water at a temperature of below 10° C.

49.5 l/hour of volatiles constituents were condensed in the tube and shell condenser (about 8% strip). The condensed volatiles constituents, together with the condensed volatiles from the flash stripping vessel and the water from the absorber (which contained absorbed volatiles constituents), were fed to a distillation column with a feed to distillate concentration ratio of 20:1. The distillate was added back to the concentrated coffee extract (at a concentration of about 56% solids) in the correct stoichiometric ratio and spray dried to produce a soluble coffee product.

The spray dried product was evaluated for flavour. It was found to have a higher aromatic impact and an increased cup strength compared to a sample in which stripped volatile constituents were not added thereto.

**Claims**

1. A process for the production of a soluble coffee product which process comprises the steps of :-

   i) subjecting roast and ground coffee to extraction with an extraction liquid in a series of extraction columns to extract soluble components therefrom and thereby produce a coffee extract;

   ii) passing the coffee extract obtained from the final extraction column in step (i) to a flash stripping vessel whereby the light-medium volatile constituents are flashed therefrom;

   iii) condensing the flashed vapours to produce a flavour and/or aroma enhancing constituent;

   iv) passing at a temperature of about 25° C non-condensible constituents of the vapour stream to a scrubber, optionally together with grinder gases and/or vent gases, absorbing the said non-condensible constituents into water;

v) adding the condensate, or a part of the condensate, from step (iii) and the liquid offtake from the scrubber of step (iv) to the coffee extract from step (ii) prior to spray drying; and

vi) drying the enhanced coffee extract in order to produce a soluble coffee product.

2. A process as claimed in claim 1 wherein the coffee extract is passed in step (ii) from the final column to the flash stripping vessel through a back pressure valve.

3. A process as claimed in claim 2 wherein the valve is maintained at a pressure of about 138 x 10³ Pa (20 psia).

4. A process as claimed in any one of the preceding claims wherein the flash stripping vessel operates at a pressure in the range of from 1 to 10 psia.

5. A process as claimed in any one of the preceding claims wherein the condenser is operated at the pressure of the flash stripping vessel.

6. A process as claimed in claim 5 wherein the condensed vapour stream is passed to a fractional distillation column to separate the components thereof.

7. A process as claimed in claim 6 wherein the top fraction from the distillation is added to the coffee extract in step (v).

8. A process as claimed in any one of the preceding claims wherein the gases which are produced during the grinding of roast coffee beans are also passed in step (iv) to the gas scrubber.

9. A process as claimed in any one of the preceding claims wherein vent gases are also passed in step (iv) to the gas scrubber.

10. A process as claimed in any one of the preceding claims wherein the extraction process is a semi-continuous, counter-current extraction process.

**Revendications**

1. Procédé pour fabriquer un produit en forme de café soluble, ce procédé incluant les étapes consistant à :

i) soumettre du café grillé et moulu à une extraction en utilisant un liquide d'extraction dans une série de colonnes d'extraction de manière à en extraire des constituants solubles et produire de ce fait un extrait de café;

ii) envoyer l'extrait de café fourni par la colonne finale d'extraction lors de l'étape i) à une enceinte d'épuration par vaporisation flash, ce qui permet d'éliminer par vaporisation flash les constituants volatils de la fraction légère.

iii) condenser les vapeurs produites par la vaporisation flash pour produire un constituant rehaussant la saveur et/ou l'arôme;

iv) envoyer, à une température d'environ 25°C, des constituants non condensables du courant de vapeur à un épurateur, facultativement conjointement avec des gaz d'un moulin de broyage et/ou des gaz d'aération, et absorber lesdits constituants non condensables dans l'eau;

v) ajouter le condensat ou une partie du condensat obtenu lors de l'étape iii) et le liquide prélevé de l'épurateur lors de l'étape iv) à l'extrait de café obtenu lors de l'étape ii) avant le séchage par pulvérisation; et

vi) faire sécher l'extrait de café concentré pour produire un produit en forme de café soluble.

2. Procédé selon la revendication 1, selon lequel, lors de l'étape (ii), on transfère l'extrait de café depuis la colonne finale jusqu'à l'enceinte d'épuration par vaporisation flash en le faisant passer dans une vanne à contre-pression.

3. Procédé selon la revendication 2, selon lequel on maintient la vanne à une pression égale à environ 138 x 10³ Pa (20 psia).

4. Procédé selon l'une quelconque des revendications précédentes, selon lequel l'enceinte d'épuration par vaporisation flash fonctionne à une pression située dans la gamme comprise entre 1 et 10 psia.

5. Procédé selon l'une quelconque des revendications précédentes, selon lequel le condenseur fonctionne à la pression de l'enceinte d'épuration par vaporisation flash.

6. Procédé selon la revendication 5, selon lequel on envoie le courant de la vapeur condensée à une colonne de distillation fractionnée pour séparer les constituants du courant de vapeur.

7. Procédé selon la revendication 6, selon lequel on ajoute l'extrait de tête provenant de la distillation à l'extrait de café obtenu lors de l'étape (v).

8. Procédé selon l'une quelconque des revendications précédentes, selon lequel on envoie également les gaz, qui sont produits pendant le broyage des grains de café, à l'épurateur à gaz lors de l'étape (iv).

9. Procédé selon l'une quelconque des revendications précédentes, selon lequel on envoie également des gaz d'aération à l'épurateur à gaz, lors de l'étape (iv).

10. Procédé selon l'une quelconque des revendications précédentes, selon lequel le procédé d'extraction est un procédé d'extraction semicontinu à contre-courant.

**Ansprüche**

1. Verfahren für die Herstellung eines löslichen Kaffeeprodukts, wobei das Verfahren die Schritte umfaßt:

    i) Extrahieren von geröstetem und gemahlenem Kaffee mit einer Extraktionsflüssigkeit in einer Reihe von Extraktionssäulen, um lösliche Bestandteile daraus zu extrahieren und dadurch einen Kaffee-Extrakt zu erzeugen;

    ii) Leiten des Kaffee-Extrakts, der aus der letzten Extraktionssäule in Schritt (i) gewonnen wird, in eine Flash-Verdampfungskammer, wobei die leicht- bis mittelflüchtigen Bestandteile davon verdampft werden;

    iii) Kondensieren der verdampften Dämpfe, um einen Geschmack und/oder Aroma verbessernden Bestandteil zu erzeugen;

    iv) Leiten von nicht kondensierbaren Bestandteilen des Dampfstroms bei einer Temperatur von etwa 25° C zu einem Wascher, gegebenenfalls zusammen mit Mahlgasen und/oder Lüftungsgasen, Absorbieren der nicht kondensierbaren Bestandteile in Wasser;

    v) Zufügen des Kondensats oder eines Teils des Kondensats aus Schritt (iii) und der flüssigen Entnahme aus dem Wascher von Schritt (iv) zum Kaffee-Extrakt aus Schritt (ii) vor dem Sprühtrocknen; und

    vi) Trocknen des verbesserten Kaffee-Extrakts, um ein lösliches Kaffeeprodukt zu erzeugen.

2. Verfahren nach Anspruch 1, worin der Kaffee-Extrakt in Schritt (ii) von der letzten Säule zur Flash-Verdampfungskammer durch ein Rückschlagventil geleitet wird.

3. Verfahzen nach Anspruch 2, worin das Ventil bei einem Druck von etwa 138 x 10³ Pa (20 psia) gehalten wird.

4. Verfahren nach einem der vorhergehenden Ansprüche, worin die Flash-Verdampfungskammer bei einem Druck von 1 bis 10 psia arbeitet.

5. Verfahren nach einem der vorhergehenden Ansprüche, worin der Kühler beim Druck der Flash-Verdampfungskammer betrieben wird.

6. Verfahren nach Anspruch 5, worin der kondensierte Dampfstrom durch eine fraktionierte Destillationssäule geleitet wird, um die Bestandteile davon aufzutrennen.

7. Verfahren nach Anspruch 6, worin die Kopffraktion aus der Destillation zum Kaffee-Extrakt in Schitt (v) gegeben wird.

8. Verfahren nach einem der vorhergehenden Ansprüche, worin in Schritt (iv) auch die Gase, die während des Mahlens von Röstkaffeebohnen erzeugt werden, zum Gaswascher geleitet werden.

9. Verfahren nach einem der vorhergehenden Ansprüche, worin in Schritt (iv) auch Lüftungsgase zum Gaswascher geleitet werden.

10. Verfahren nach einem der vorhergehenden Ansprüche, worin das Extraktionsverfahren ein semikontinuierliches Gegenstrom-Extraktionsverfahren ist.

FIG.1.

EP 0 227 263 B1

FIG. 2.

TO
ATMOSPHERE

18

19

17

CHILLED
WATER

13

16

10

TO
DISTILLATION
COLUMN

15